# EUROPEAN PATENT APPLICATION

(11) **EP 2 814 235 A1**
(43) Date of publication of application: **17.12.2014**
(21) Application number: 13172064.1
(22) Date of filing: 14.06.2013
(51) Int. Cl.: H04N 5/225, H04N 5/235

(54) **Camera device with diffuser and related method**

(71) Applicant: Q Lifestyle Holding AB, 111 44 Stockholm (SE)
(72) Inventor: Arcari, Andrea, 111 44 Stockholm (SE); Ricci, Brandon, 111 44 Stockholm (SE); Lesina, Giorgio, 111 44 Stockholm (SE)
(74) Representative: Zacco Denmark A/S

(57) **Abstract**

A method for image capture and a camera device is disclosed. The camera device comprises a camera housing with a center axis and having a first surface and a second surface. The camera device comprises a sensor arrangement for image capturing and a lens housing having a first lens housing surface with a lens opening. Additionally, the camera device comprises a flash arrangement comprising one or a plurality of Light Emitting Diode (LED) elements including at least a first LED element configured to emit light with a first intensity profile, and optionally a second LED element configured to emit light with a second intensity profile. The flash arrangement may be arranged between the first lens housing surface and the second surface of the camera housing, and the camera device comprises a diffuser optionally mounted distal to and covering the plurality of LED elements.

## Description

The present invention relates to a method and a camera device comprising a flash arrangement and a diffuser. The flash arrangement and the diffuser are configured to emit diffused light for creating a substantially uniform distributed flash light, in particular for avoiding unwanted shadowing effects and red-eye effects of the human target.

### BACKGROUND

Conventional camera devices and smart phone cameras now include the feature of capturing digital images and communicate them to other devices, such as by email or by posting to a social networking web site. However, it is well known that Smartphone cameras typically do not provide sufficient image quality in particular in dark surroundings. It is further well known, that conventional cameras and Smartphone are usually high costly, fragile and not easy to handle.

Further, in order to obtain a satisfactory image, images must be taken at times where the image objects have a desired appearance. For example, it may be desired to take pictures of smiling persons and to avoid closed eyes.

### SUMMARY

Accordingly, there is a need for a camera device that is simple to use and which provides sufficient image quality in different environments.

Accordingly, a camera device is disclosed, the camera device comprising a camera housing with a center axis and having a first surface and a second surface. The camera device comprises a sensor arrangement for image capturing and a lens housing having a first lens housing surface with a lens opening. Additionally, the camera device comprises a flash arrangement comprising one or a plurality of Light Emitting Diode (LED) elements including at least a first LED element configured to emit light with a first intensity profile, and optionally a second LED element configured to emit light with a second intensity profile. The flash arrangement may be arranged between the first lens housing surface and the second surface of the camera housing, and the camera device comprises a diffuser optionally mounted distal to and covering the plurality of LED elements.

Also disclosed is a method of capturing an image with a camera device, the method comprising emitting light from a flash arrangement comprising a plurality of LED elements including at least a first LED element and at least a second LED element, the flash arrangement being arranged between a first lens housing surface of a lens housing and a second surface of a camera housing; and diffusing the emitted light by a diffuser distal to and covering the plurality of LED elements.

It is an advantage of the present invention, that when a camera user operating the camera device wants to capture an image or picture of an image object in a poor light condition, the emitted light from the plurality of LED elements will not come from a number of concentrated sources/points, but rather will spread out, due to internal reflection of the emitted light in the diffuser, thus reducing or substantially eliminating harsh light and hard shadows. This is particularly useful for portrait photographers, since harsh light and hard shadows are usually not considered flattering in a portrait.

It is an advantage of the present invention that a cost-efficient camera device with satisfactory image quality, in particular in dark environments is provided. Further it is an advantage of the present invention that the camera device allows for convenient user indication by using the flash arrangement with the diffuser for indicating operating parameters of the camera to an image object or target.

It is an advantage of the present invention that the combination of the flash arrangement and the diffuser emitting a uniform distributed flash light leading to an improved experience for the human object.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
- Fig. 1: schematically illustrates an exemplary camera device,
- Fig. 2A: schematically illustrates a front view of an exemplary camera device
- Fig. 2B: schematically illustrates a first side view of a camera device,
- Fig. 2C: schematically illustrates a back view of an exemplary camera device,,
- Fig. 2D: schematically illustrates a second side view of a camera device,
- Fig. 3A: schematically illustrates a top view of the camera device,
- Fig. 3B: schematically illustrates a bottom view of the camera device,
- Fig. 4: schematically illustrates a diagram showing the arrangement of integral components in a camera device,
- Fig. 5A: schematically illustrates a top view of plurality of LED elements,
- Fig. 5B: schematically illustrates a top view of plurality of LED elements,
- Fig. 6: schematically illustrates a top view of a diffuser.

The figures are schematic and simplified for clarity, and they merely show details which are essential to the understanding of the invention, while other details have been left out. Throughout, the same reference numerals are used for identical or corresponding parts.

### DETAILED DESCRIPTION

The present invention relates to a method and a camera device comprising a flash arrangement and a diffuser, wherein the flash arrangement may comprise a plurality of light emitting diode (LED) elements emitting light, and the emitted light being spread by the diffuser

The camera device comprises a camera housing having a first surface (front) and a second surface (back). Furthermore, the camera housing has a top surface and a bottom surface. The first surface (front) of the camera housing is facing towards a target object and the second surface (back) of the camera housing is facing away from the target object.

The camera device comprises a sensor arrangement. The sensor arrangement may comprise one or more image sensors, such as a CCD image sensor, a CMOS image sensor or a sCMOS comprising a CMOS readout integrated circuits (ROICs) bonded to a CCD imaging substrate.

Further, the camera device comprises a lens housing. The lens housing may comprise a first lens housing surface with a lens opening. A center axis extends through the lens opening, e.g. the center of the lens opening. During image capture, the lens opening admits light rays to pass through the lens opening onto the sensor arrangement. Furthermore, the lens housing may comprise an aperture for reducing the amount of admitted light rays onto the sensor arrangement. The lens housing may be arranged around the center axis, and the first lens housing surface may be parallel with the first surface of the camera housing. The lens housing may be mounted on the first surface of the camera housing or built into the first surface of the camera housing.

The camera device comprises a flash arrangement. The flash arrangement may comprise a plurality of LED elements, wherein the plurality of LED elements may include at least a first LED element configured to emit light with a first intensity profile and a second LED element configured to emit light with a second intensity profile. The intensity profile of a LED element may be the intensity level as a function of wavelength or color. The plurality of LED elements may emit different colors uniform or non-uniform and different intensity level being uniform or non-uniform. The plurality of LED elements may have the same or different intensity profiles.

The flash arrangement may be arranged between the first lens housing surface and the second surface of the camera housing. Additionally, the flash arrangement may be arranged around the center axis and encircling the lens opening. Furthermore, the flash arrangement may be mounted on the first surface of the camera housing or built into the first surface of the camera housing. The flash arrangement may have a shape of a ring, a regular or a non-regular polygon.

The plurality of LED elements may comprise at least four, five, six or more LED elements including a first LED element, a second LED element, a third LED element, a fourth LED element, optionally a fifth LED element, and optionally a sixth LED element. The LED elements may be arranged in an LED plane perpendicular to the center axis.

The plurality of LED elements may be arranged around the center axis and encircling the lens opening.

The plurality of LED elements may be arranged at the same or different distances from the center axis, where R₁, R₂, R₃...., R_{N} denotes the distance and N is the number of LED elements.

The angle Θ_{¡, j} between i'th LED element and j'th LED element is the angle between two axes in the LED plane and crossing the center axis and the respective LED elements or projections thereof into the LED plane. The LED elements may be evenly distributed around the center axis and around the lens opening. In an exemplary camera device, Θ₁,₂ may be in the range from 30° to 90°, such as from 40° to 60°.

An LED element may include one or a plurality of LEDs.

The camera device comprises at least one diffuser optionally mounted on or in the camera housing. The diffuser is configured to spread or diffuse emitted light from the plurality of LED elements, e.g. for obtaining improved flash light distribution or properties. The diffuser has an inner diffuser edge and an outer diffuser edge, wherein the inner and/or outer diffuser edges may have the shape of a ring, oval, a non-regular or a regular polygon. The diffuser may have a first diffuser surface facing a target object. The first diffuser surface may be plane or substantially plane and may be perpendicular to the center axis. The diffuser may have a second diffuser surface facing the plurality of LED elements.

The inner diffuser edge may surround or encircle the lens opening and the center axis and thus form a diffuser opening for image capture through the diffuser opening. The diffuser may be divided into a number of diffuser segments, e.g. corresponding to the number of LED elements. The diffuser segments may be ring segments of a ring diffuser. A light blocking layer may be arranged between two neighboring diffuser segments.

Accordingly, the diffuser may be mounted between an image object and the plurality of LED elements for diffusing light from the LED elements towards the image object. The diffuser may be mounted on the first surface of the camera housing or built into the camera housing. The diffuser may be arranged around the center axis and encircling the lens opening, and the diffuser may cover the plurality of LED elements. The inner diffuser edge may be circular and having an inner radius R_{d1}. The outer diffuser edge may be circular and having an outer diffuser radius R_{d2} larger than the inner radius for forming a ring shaped diffuser is formed. The inner diffuser radius may be uniform or non-uniform in the range from 1 mm to 40 mm, such as from 2 mm to 25 mm. The outer diffuser radius is larger than the inner diffuser radius and may be uniform or non-uniform in the range from 2 mm to 50 mm, such as from 5 mm to 20 mm. The outer diffuser radius may be larger than 3 mm. The outer diffuser radius may be less than 30 mm. In a currently preferred camera device, the outer diffuser radius is in the range from 5 mm to 15 mm.

It is an advantage of the present invention that the camera housing has pocket size. The camera housing may have a length (distance from first side to second side) less than 150 mm such as in the range from 30 to 100 mm. The camera housing may have a height (distance from top to bottom) less than 100 mm such as in the range from 30 mm to 80 mm. The camera housing may have a thickness (distance from first to second surface) less than 40 mm or less than 30 mm.

The diffuser may be made of any suitable diffuser material, such as a polymer or a polymer composition comprising a mix of polymers optionally with one or more additives. A suitable diffuser material may be polyethylene (PET), polyvinylchloride (PVC) or glass.

The camera device may comprise a lens arrangement, and the lens arrangement may comprise a lens opening admitting light rays, optionally at least one optical lens for focusing admitted light rays and an aperture. The lens arrangement may comprise a first lens surface facing an image object. The lens arrangement may be mounted on the first surface of the camera housing or built into the first surface of the camera housing. The lens arrangement may be aligned with the sensor arrangement.

The lens arrangement or the lens housing may comprise a focus adjustment element for manual adjustment of the camera lens focal of the lens arrangement. The focus adjustment element may be mounted on the lens arrangement or on the lens housing.

The camera device comprises a user interface configured for receiving user input. The user interface may comprise one or more buttons, e.g. including a first button and/or a second button. The user interface may comprise a third button and/or a fourth button. The user interface may comprise a slider or other selector device having a plurality of positions including a first and second position. The slider may be at least two -position slider, i.e. a slider with at least a first position and a second position. The slider may be used for setting operating parameters or operation mode of the flash arrangement.

The camera device may comprise a wireless communication unit, e.g. including a 3G module and/or a WIFI module. The wireless communication unit may be configured to upload a recorded picture or image to a server at a selected provider for upload to a social network or other image network, such as Facebook, Instagram, Dailybooth, Flickr, Fotki, Fotolog, My Opera or Twitter. The configuration of at least one preselected social network may be performed by the user or the distributor of the camera device. Further, the wireless communication unit may upload the recorded picture to a cloud computing network, the cloud computing network being Client-server software on a remote station. The Client-server may be a web-server for storing personal information, such as pictures. Furthermore, the camera device may comprise one or more of a memory unit for storing the recorded picture locally, a SIM card slot, a battery compartment for accommodation of a battery or other power source, and a connection interface, e.g. for transferring data between the camera device and an external unit and/or charging a battery or other power source. The connection interface may include a mini USB interface

The camera device may comprise a view display for live view functionality and/or for displaying a recorded picture or parts thereof. The view display may be a CCD display or other display known for cameras.

The camera device comprises a controller unit connected to the user interface, the sensor arrangement and the flash arrangement. The controller unit may comprise a flash controller. The controller unit/flash controller controls the flash arrangement according to one or more operating schemes which may be selected from a plurality of operating schemes. An operating scheme may control the first LED element and the second LED element individually and/or simultaneously.

The camera device may comprise a viewfinder shaped as an opening from the first surface to the second surface of the camera housing. The viewfinder may have a rectangular cross section. The viewfinder may be used by the user for composing a picture of the target object. The user looks through the viewfinder and what the user sees provides at least an indication of what is recorded by the camera device.

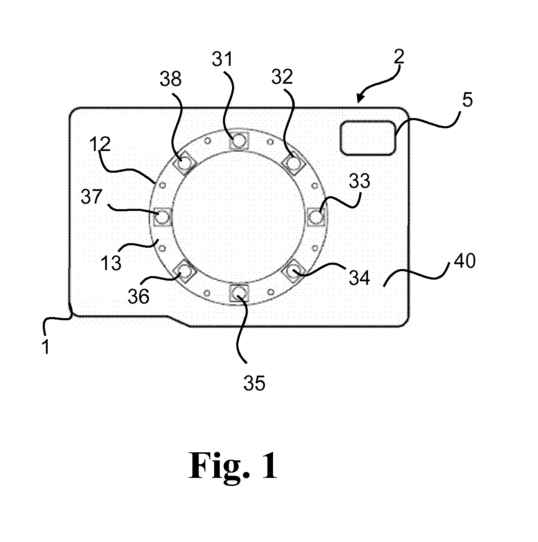

Fig. 1 schematically illustrates an exemplary camera device 2 according to the invention. The camera device 2 has a camera housing 1 and a flash arrangement 12 including a first LED element 31, a second LED element 32, a third LED element 33, a fourth LED element 34, a fifth LED element 35, a sixth LED element 36, a seventh LED element 37 and an eighth LED element 38. The LED elements are mounted on a printed circuit board (PCB) 13 and uniformly distributed around the lens opening of the camera device. A viewfinder 5 is shaped as an opening with rectangular cross section from the first surface 40 of the camera housing to the second surface (not shown) of the camera housing.

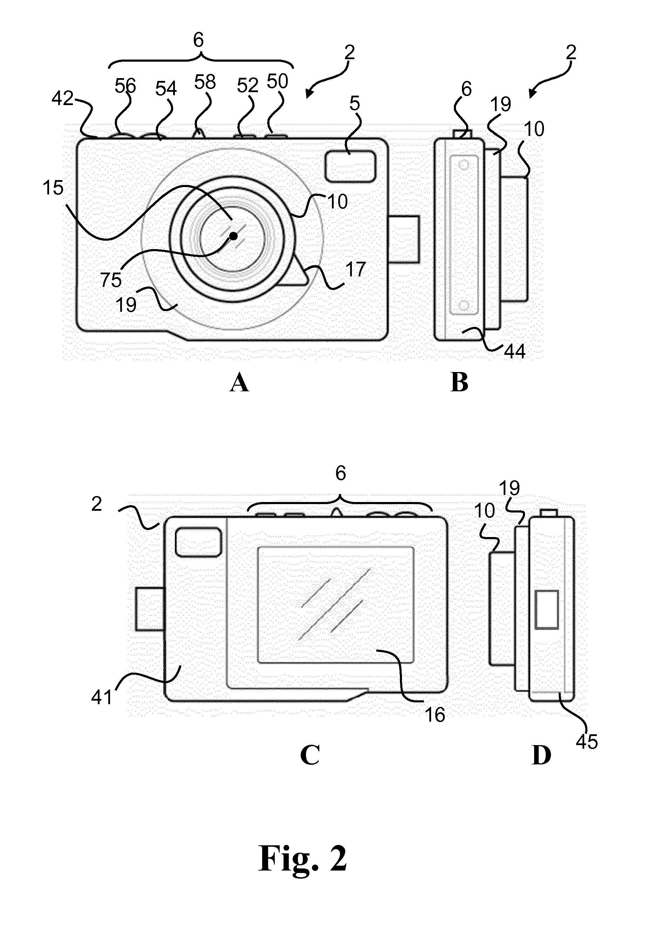

Fig. 2A-D are different view of a camera device 2 according to the invention. Fig. 2A is a front view of an exemplary camera device 2 comprising a user interface 6 including four buttons 50, 52, 54, 56 and a three-position slider 58. The user interface 6 is mounted on the top surface 42 of the camera housing. A ring-shaped diffuser 19 is mounted distal to and covering LED elements 31-38. The diffuser is mounted on the first surface 40 of the camera housing. The lens arrangement 10 comprises focus adjustment element 17. Furthermore, the lens arrangement 10 optionally comprises at least one optical lens 10' and/or a lens opening 15 admitting light rays onto the sensor arrangement 8. Fig. 2B is a first side view of the camera device 2 showing a first side 44 of the camera housing. Fig. 2C is a back view of the camera device 2. The camera device 2 comprises a view display 16 for live view functionality and for displaying recorded picture(s). The view display 16 is mounted on the second surface 41 of the camera housing 4. Fig. 2D is a second side view of the camera device 2 with the second side surface 45 of the camera housing.

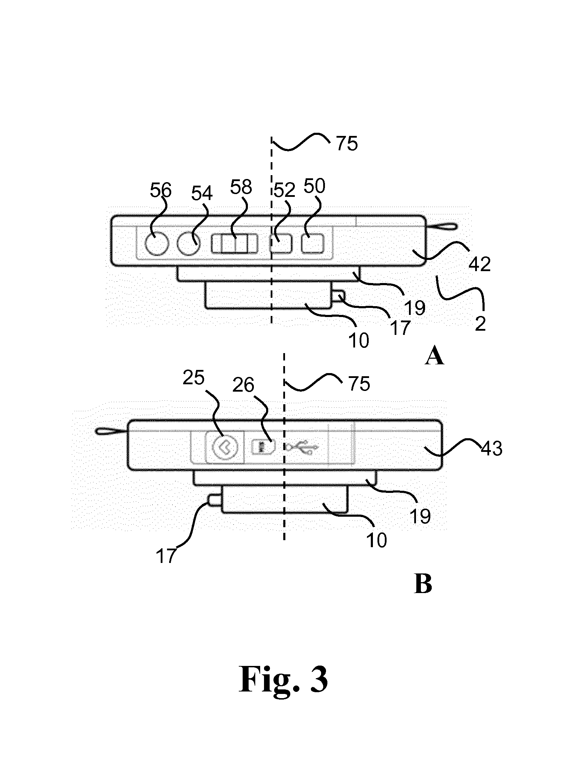

Figs. 3A and 3B illustrate top and bottom views of the camera device 2, respectively.
The camera device 2 comprises a mini-USB port 25 and a SIM card Slot 26.

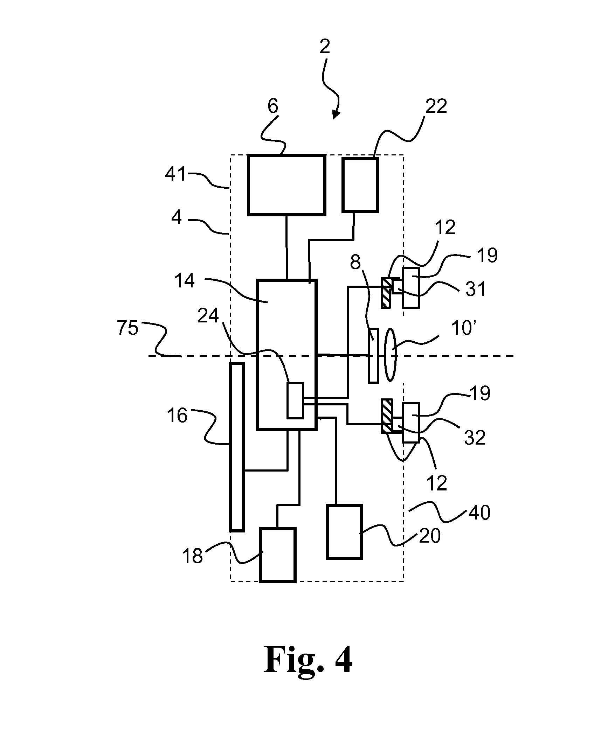

Fig. 4 schematically illustrates a block diagram of the camera device 2. The camera device 2 comprises a camera housing 4 accommodating a controller unit 14 including a flash controller 24. The controller unit 14 is connected to a user interface 6, a battery 22, a view display 16, a wireless communication unit 18, a memory unit 20, a sensor arrangement 8, a lens arrangement 10, a flash arrangement 12 including eight LED elements (only first LED element 31 and second LED element 32 are shown) each LED element being connected to the controller unit, and a diffuser 19.

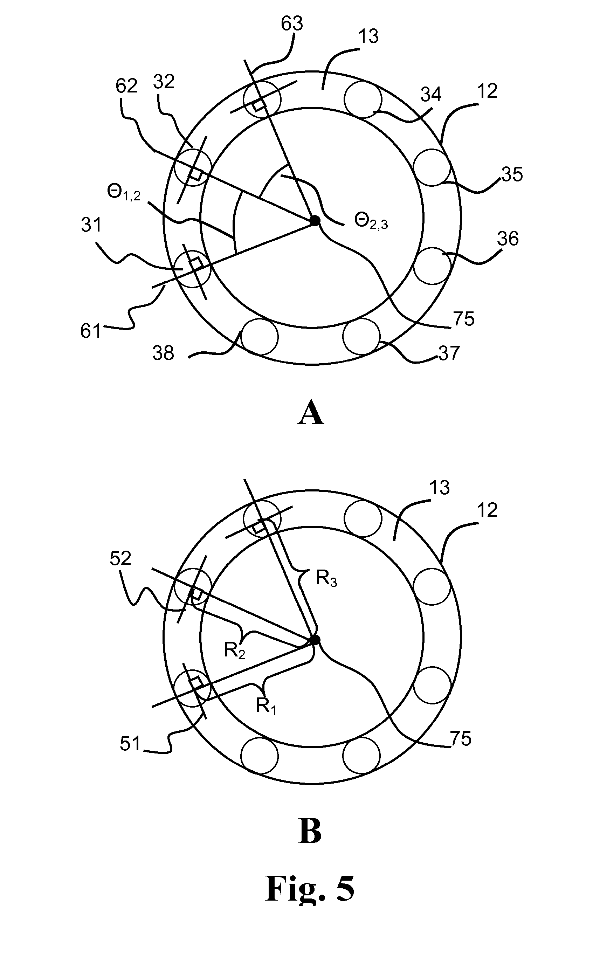

Fig. 5A and 5B schematically illustrate top views of the flash arrangement 12 including eight LED elements 31 - 38 in an LED plane. The eight LED elements are uniformly arranged in a circle, i.e. with angles Θ₁,₂ Θ_{2,3,} Θ_{3,4,} Θ_{4,5,} Θ₅,₆, Θ₆,₇, Θ_{7,8}, and Θ_{8,1} equal to 45 degrees. The LED elements 31-38 have the same distance to the center axis 75.

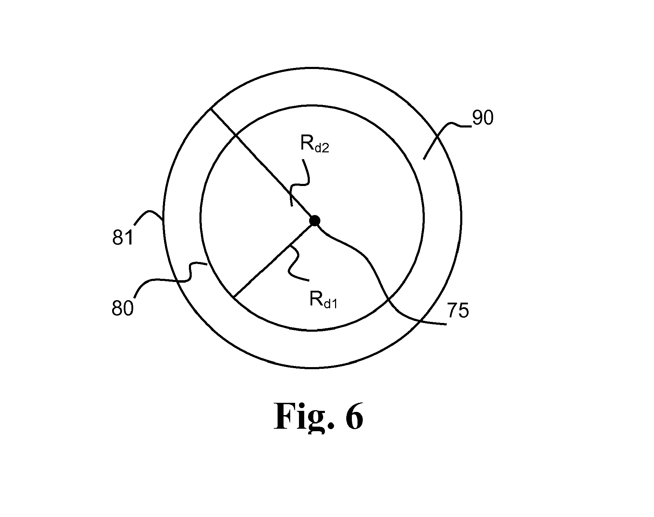

Fig. 6 schematically illustrates a diffuser with a plane first diffuser surface 90 and a second diffuser surface (not shown)..An inner diffuser edge 80 forms a circle with inner diffuser radius R_{d1} in the range from 5 to 25 mm. An outer diffuser edge 81 forms a circle with outer diffuser radius R_{d2} in the range from 20 mm to 50.

### LIST OF REFERENCES

- 2: camera device
- 4: camera housing
- 5: viewfinder
- 6: user interface
- 8: sensor arrangement
- 10: lens arrangement
- 10': optical lens
- 12: flash arrangement
- 13: printed circuit board (PCB)
- 14: controller unit
- 15: lens opening
- 16: view display
- 17: focus adjustment element
- 18: wireless communication unit
- 19: diffuser
- 20: memory unit
- 22: battery
- 23: wearing string
- 24: flash controller
- 25: mini-USB port
- 26: SIM card slot
- 31: first LED element
- 32: second LED element
- 33: third LED element
- 34: fourth LED element
- 35: fifth LED element
- 36: sixth LED element
- 37: seventh LED element
- 38: eighth LED element
- 40: first surface of the camera housing
- 41: second surface of the camera housing
- 42: top surface of the camera housing
- 43: bottom surface of the camera housing
- 44: first side of the camera housing
- 45: second side of the camera housing
- 50: first button
- 52: second button
- 54: third button
- 56: fourth button
- 58: slider
- 61: first axis
- 62: second axis
- 63: third axis
- 75: center axis
- 80: inner diffuser edge
- 81: outer diffuser edge
- 90: first diffuser surface
- 91: second diffuser surface
- R_{d1}: inner diffuser radius
- R_{d2}: outer diffuser radius

## Claims

1. A camera device comprising
- a camera housing with a center axis and having a first surface and a second surface;
- a sensor arrangement for image capturing;
- a lens housing having a first lens housing surface with a lens opening;
- a flash arrangement comprising a plurality of LED elements including at least a first LED element configured to emit light with a first intensity profile, and a second LED element configured to emit light with a second intensity profile, the flash arrangement being arranged between the first lens housing surface and the second surface of the camera housing; and
- a diffuser distal to and covering the plurality of LED elements.

2. Camera device according to claim 1, wherein the diffuser is mounted on the camera housing .

3. Camera device according to any of the preceding claims, wherein the camera device comprises a focus adjustment element for manual adjustment of the camera lens focal of the lens arrangement.

4. Camera device according to any of the preceding claims, the camera housing forming a view finder shaped as an opening from the first surface to the second surface of the camera housing, the view finder having a rectangular cross section.

5. Camera device according to any of the preceding claims, wherein the plurality of LED elements are arranged around the center axis and encircling the lens opening.

6. Camera device according to any of the preceding claims, wherein the diffuser has an outer edge with the shape of a ring or non-regular or regular polygon.

7. Camera device according to any of the preceding claims, wherein the diffuser has an inner edge with the shape of a ring or non-regular or regular polygon.

8. Camera device to any of the preceding claims, wherein the plurality of LED elements have the same intensity profile.

9. Camera device to any of the claims 1-7, wherein the first intensity profile is different from the second intensity profile.

10. Camera device to any of the preceding claims, wherein the plurality of LED elements includes at least six LED elements arranged around the center axis and encircling the lens opening.

11. A method of capturing an image with a camera device, the method comprising;
- emitting light from a flash arrangement comprising a plurality of LED elements including at least a first LED element and at least a second LED element, the flash arrangement being arranged between a first lens housing surface of a lens housing and a second surface of a camera housing; and
- diffusing the emitted light by a diffuser distal to and covering the plurality of LED elements.
